# EUROPEAN PATENT APPLICATION

(11) **EP 4 425 992 A1**
(43) Date of publication of application: **04.09.2024**
(21) Application number: 22897847.4
(22) Date of filing: 23.11.2022
(51) Int. Cl.: H04W 24/02

(54) **INTENT PROCESSING METHOD AND APPARATUS, AND DEVICE**

(30) Priority: 29.11.2021 CN 202111433699
(71) Applicant: Huawei Technologies Co., Ltd., Shenzhen, Guangdong 518129 (CN)
(72) Inventor: LI, Yexing, Shenzhen, Guangdong 518129 (CN); LI, Xianming, Shenzhen, Guangdong 518129 (CN); YAN, Wen, Shenzhen, Guangdong 518129 (CN)
(74) Representative: Pfenning, Meinig & Partner mbB
(86) International application number: PCT/CN2022/133750
(87) International publication number: WO 2023/093764

(57) **Abstract**

This application discloses an intent processing method, apparatus, and device, to ensure performance of a network to which a device executing an intent belongs. The method includes: After sending, to a second device, first information that indicates impact on at least one KPI when a solution of a first intent is executed, a first device receives information that indicates an execution suggestion for the first intent and that is from the second device. In this way, the second device may determine the execution suggestion for the first intent based on the impact on the at least one KPI when the solution of the first intent is executed. This can avoid a case in which when the solution of the first intent is executed, the at least one KPI does not satisfy a requirement of the second device for the at least one KPI in a network to which a device executing the first intent belongs, and therefore ensure performance of the network to which the device executing the first intent belongs.

## Description

### CROSS-REFERENCE TO RELATED APPLICATIONS

This application claims priority to Chinese Patent Application No. 202111433699.7, filed with the China National Intellectual Property Administration on November 29, 2021 and entitled "INTENT PROCESSING METHOD, APPARATUS, AND DEVICE", which is incorporated herein by reference in its entirety.

### TECHNICAL FIELD

This application relates to the field of communication technologies, and in particular, to an intent processing method, apparatus, and device.

### BACKGROUND

To reduce management complexity of cyber infrastructure and improve operation and maintenance efficiency, an intent-driven management service (Intent-Driven Management Service, IDMS) is introduced to a mobile communication system (for example, a 5th generation (5th generation, 5G) communication system).

In the intent-driven management service, an intent consumer may send an intent expression for an intent to an intent producer, to indicate the intent producer to generate a solution that can satisfy the intent. Then, the intent producer selects, from generated solutions, a solution (namely, a to-be-executed solution) used to satisfy the intent. The intent may be represented by using the intent expression. The intent expression includes only a target, and does not involve how to achieve the target. In this way, intent producers of different device vendors may generate a solution for achieving the target (in other words, generate the solution that satisfies the intent), to improve the operation and maintenance efficiency.

Currently, when determining the solution used to satisfy the intent, the intent producer only considers whether the intent has a syntax/an operation conflict with another intent. When the selected solution is executed, performance of a network to which a device (for example, an access network (access network, AN) device or a core network (core network, CN) device) executing the solution belongs may be affected.

### SUMMARY

This application provides an intent processing method, apparatus, and device, to ensure performance of a network to which a device executing an intent belongs.

According to a first aspect, an embodiment of this application provides an intent processing method. The method includes:

After sending first information to a second device, a first device may receive information that indicates an execution suggestion for a first intent and that is from the second device. The first information may indicate impact on at least one KPI when a solution of the first intent is executed.

Optionally, the solution of the first intent is at least one solution that can satisfy the first intent.

Optionally, the execution suggestion includes: stopping executing the first intent, or executing a first solution of the first intent.

According to the method, after receiving the first information, the second device may determine the execution suggestion for the first intent based on the impact on the at least one KPI when the solution of the first intent is executed. This can avoid a case in which when the solution of the first intent is executed, the at least one KPI does not satisfy a requirement of the second device for the at least one KPI in a network to which a device executing the first intent belongs, and therefore ensure performance of the network to which the device executing the first intent belongs.

In a possible design, before sending the first information to the second device, the first device may receive information that indicates the at least one KPI and that is from the second device.

Optionally, the information that indicates the at least one KPI includes at least one of the following:
the at least one KPI; and
an identifier and/or an intent expression of a second intent, where the second intent indicates the at least one KPI.

According to this design, the first device may feed back, to the second device, only the impact of executing the solution of the first intent on the at least one KPI indicated by the information that indicates the at least one KPI, and does not need to feed back impact of executing the solution of the first intent on all KPIs, to save transmission resources.

In a possible design, the at least one KPI includes at least one of the following: a throughput, a throughput volume, energy consumption, bandwidth usage, a delay, and a packet loss rate.

In a possible design, the first information includes:
information that indicates a value of the at least one KPI when the solution of the first intent is executed; and/or
information that indicates an offset of the at least one KPI when the solution of the first intent is executed, and information that indicates a current value of the at least one KPI.

According to this design, the first device may flexibly indicate the value of the at least one KPI when the solution of the first intent is executed.

In a possible design, before sending the first information to the second device, the first device may receive second information from a third device. The second information may indicate at least one of the following: the offset of the at least one KPI when the solution of the first intent is executed, and an offset of the at least one KPI when at least one operation in the solution of the first intent is executed.

According to this design, the first device may obtain the information used to determine the offset of the at least one KPI when the solution of the first intent is executed, to determine the value of the at least one KPI when the solution of the first intent is executed.

According to a second aspect, an embodiment of this application provides an intent processing method. The method includes:

After receiving first information from a first device, a second device sends, to the first device, information that indicates an execution suggestion for a first intent. The first information may indicate impact on at least one KPI when a solution of the first intent is executed.

Optionally, the solution of the first intent is at least one solution that can satisfy the first intent.

Optionally, the execution suggestion includes: stopping executing the first intent, or executing a first solution of the first intent.

According to the method, after receiving the first information, the second device may determine the execution suggestion for the first intent based on the impact on the at least one KPI when the solution of the first intent is executed. This can avoid a case in which when the solution of the first intent is executed, the at least one KPI does not satisfy a requirement of the second device for the at least one KPI in a network to which a device executing the first intent belongs, and therefore ensure performance of the network to which the device executing the first intent belongs.

In a possible design, before receiving the first information from the first device, the second device may send, to the first device, information that indicates the at least one KPI.

Optionally, the information that indicates the at least one KPI includes at least one of the following:
the at least one KPI; and
an identifier and/or an intent expression of a second intent, where the second intent indicates the at least one KPI.

According to this design, the second device sends, to the first device, the information that indicates the at least one KPI. In this way, the first device may feed back, to the second device, only the impact of executing the solution of the first intent on the at least one KPI indicated by the information that indicates the at least one KPI, and does not need to feed back impact of executing the solution of the first intent on all KPIs, to save transmission resources.

In a possible design, the at least one KPI includes at least one of the following: a throughput, a throughput volume, energy consumption, and bandwidth usage.

In a possible design, the first information includes:
information that indicates a value of the at least one KPI when the solution of the first intent is executed; and/or
information that indicates an offset of the at least one KPI when the solution of the first intent is executed, and information that indicates a current value of the at least one KPI.

According to this design, the second device may flexibly obtain the value of the at least one KPI when the solution of the first intent is executed.

According to a third aspect, an embodiment of this application provides an intent processing method. The method includes:

After a first device sends first information to a second device, the second device sends, to the first device, information that indicates an execution suggestion for a first intent. The first information indicates impact on at least one KPI when a solution of the first intent is executed.

According to the method, after receiving the first information, the second device may determine the execution suggestion for the first intent based on the impact on the at least one KPI when the solution of the first intent is executed. This can avoid a case in which when the solution of the first intent is executed, the at least one KPI does not satisfy a requirement of the second device for the at least one KPI in a network to which a device executing the first intent belongs, and therefore ensure performance of the network to which the device executing the first intent belongs.

In a possible design, before the first device sends the first information to the second device, the second device may send, to the first device, information that indicates the at least one KPI.

According to this design, the first device may feed back, to the second device, only the impact of executing the solution of the first intent on the at least one KPI indicated by the information that indicates the at least one KPI, and does not need to feed back impact of executing the solution of the first intent on all KPIs, to save transmission resources.

According to a fourth aspect, an embodiment of this application provides an intent processing apparatus, including a unit configured to perform the steps in any one of the foregoing aspects.

According to a fifth aspect, an embodiment of this application provides an intent processing device, including at least one processing element and at least one storage element. The at least one storage element is configured to store a program and data, and the at least one processing element is configured to read and execute the program and the data that are stored in the storage element, so that the method provided in any one of the foregoing aspects of this application is implemented.

According to a sixth aspect, an embodiment of this application provides an intent processing system, including: a first device configured to perform the method provided in the first aspect, and a second device configured to perform the method provided in the second aspect.

According to a seventh aspect, an embodiment of this application further provides a computer program. When the computer program is run on a computer, the computer is enabled to perform the method provided in any one of the foregoing aspects.

According to an eighth aspect, an embodiment of this application further provides a computer-readable storage medium. The computer-readable storage medium stores a computer program. When the computer program is executed by a computer, the computer is enabled to perform the method provided in any one of the foregoing aspects.

According to a ninth aspect, an embodiment of this application further provides a chip. The chip is configured to read a computer program stored in a memory, to perform the method provided in any one of the foregoing aspects.

According to a tenth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

For technical effects that can be achieved in any one of the fourth aspect to the tenth aspect, refer to descriptions of technical effects that can be achieved in any one of the possible designs of the first aspect to the third aspect. Repeated parts are not described herein again.

### BRIEF DESCRIPTION OF DRAWINGS

FIG. 1 is a schematic of an architecture of a communication system according to an embodiment of this application;
FIG. 2 is a schematic of an architecture of another communication system according to an embodiment of this application;
FIG. 3 is a flowchart of a first intent processing method according to an embodiment of this application;
FIG. 4 is a flowchart of a second intent processing method according to an embodiment of this application;
FIG. 5 is a flowchart of a third intent processing method according to an embodiment of this application;
FIG. 6 is a flowchart of a fourth intent processing method according to an embodiment of this application;
FIG. 7 is a flowchart of a fifth intent processing method according to an embodiment of this application;
FIG. 8 is a flowchart of a sixth intent processing method according to an embodiment of this application;
FIG. 9 is a schematic of a structure of an intent processing apparatus according to an embodiment of this application; and
FIG. 10 is a schematic of a structure of an intent processing device according to an embodiment of this application.

### DESCRIPTION OF EMBODIMENTS

This application provides an intent processing method, apparatus, and device, to ensure performance of a device executing a solution of an intent. The method, the apparatus, and the device are based on a same technical idea. Because the method, the apparatus, and the device have similar principles for resolving the problems, for implementations of the apparatus, the device, and the method, refer to each other, and repeated parts are not described.

According to the solution provided in embodiments of this application, after sending, to a second device, first information that indicates impact on at least one key parameter indicator (key performance indicator, KPI) when a solution of a first intent is executed, a first device receives information that indicates an execution suggestion for the first intent and that is from the second device. In this way, the second device may determine the execution suggestion for the first intent based on the impact on the at least one KPI when the solution of the first intent is executed. This can avoid a case in which when the solution of the first intent is executed, the at least one KPI does not satisfy a requirement of the second device for the at least one KPI in a network to which a device executing the first intent belongs, and therefore ensure performance of the network to which the device executing the first intent belongs.

The following describes some terms in embodiments of this application, to facilitate understanding of a person skilled in the art.
(1) An intent is an expectation for a system in which an intent producer is located, and may include a requirement, a target, and a restriction (that is, a constraint).

An intent expression is an expression that carries the intent. Therefore, the intent may be represented by the intent expression. The intent expression may include an action and an object (also referred to as an operation object). The action is a network operation abstracted and simplified based on the intent, and may include an intent-driven action (intent-driven action, IDA) name (name) and a series of related properties (for example, IDA properties, IDA properties). The object is management object information provided based on the intent, and may include an intent-driven object (intent-driven object, IDO) name (name) and a series of properties (for example, IDO properties, IDO properties) identifying the object. A target value of the intent may be included in the action or the obj ect; or the intent expression includes the action, the obj ect, and the target value. For example, the intent is to optimize a downlink rate of a cell. The action is "optimize", the object is "cell", and the target value is a specific value of the downlink rate of the cell.

The intent expression includes only descriptions of the target, and a specific implementation of the intent is obtained by parsing and translating the intent expression by the intent producer. The intent producer can determine which solution is used to satisfy the expectation. In other words, the intent producer can determine which solution is used to satisfy the intent.

### (2) Intent conflict

When two intents cannot both be satisfied due to mutual exclusion, the two intents have the intent conflict.

The intent conflict may include a syntax conflict and/or an operation conflict.

The syntax conflict means that intent expressions of the two intents have a conflict. For example, the intent expressions of the two intents describe mutually exclusive targets of a same object (such as a cell or base station) under a same effective condition. In an example, if an intent expression of one intent reflects a target of increasing a downlink rate of a cell, and an intent expression of another intent reflects a target of decreasing the downlink rate of the cell, a syntax conflict exists between the two intents.

The operation conflict means a conflict that exists between the two intents on intent operations (intent operations) after translation. In other words, operations of the two intents cannot be executed simultaneously. For example, solutions respectively corresponding to the two intents include mutually exclusive operations on a same parameter and/or property of a same network element. In an example, when a solution of an intent 1 requires to increase a network configuration parameter A, and a solution of an intent 2 requires to decrease the network configuration parameter A, an operation conflict exists between the intent 1 and the intent 2.

(3) Intent translation is a process of determining a policy of an intent.

The policy may be a condition that indicates that the intent is not satisfied. For example, when the intent is energy saving, a policy A may be that when energy consumption is greater than a first threshold, the energy consumption is abnormal (in other words, energy is not saved); and a policy B may be that when the energy consumption is greater than a second threshold, the energy consumption is abnormal (in other words, energy is not saved).

It may be understood that, even for a same intent, solutions that can satisfy the intent and that are determined by using different policies may be different.

(4) A solution of an intent is at least one solution that can satisfy the intent. Each solution may include at least one operation.

For example, when the intent is energy saving, a solution of the intent may include:
Solution 1: Enabling energy saving scheduling, timing carrier shutdown, and intelligent carrier shutdown.
Solution 2: Enabling pico remote radio unit (pico remote radio unit, pRRU) deep dormancy and radio frequency module deep dormancy.
Solution 3: Enabling multi-RAT coordinated symbol energy saving, a low energy consumption mode, and radio frequency channel intelligent shutdown.

The solution of the intent may be at least one solution that is generated by the intent producer and that can satisfy the intent, or may be a solution that is being executed by a device executing the intent and that is used to satisfy the intent. When the device executing the intent executes the solution of the intent, a network in which the device executing the intent is located can satisfy the intent.

(5) A KPI is a key parameter in a system.

The KPI may include a network configuration parameter. For example, the KPI includes at least one of the following: a throughput, a throughput volume, energy consumption, bandwidth usage, a delay, a packet loss rate, and the like.

(6) An intent consumer is a device that manages an intent. Specifically, the intent consumer may generate the intent, and send, to an intent producer, an intent expression used to carry the intent. The intent may be a requirement of the intent consumer for a network to which a device executing a solution of the intent belongs. For example, the intent may reflect a requirement of the intent consumer for at least one KPI in the network to which the device executing the solution of the intent belongs.

The intent producer is a device that processes the intent. Specifically, after receiving the intent expression from the intent consumer, the intent producer may generate a plurality of solutions that can satisfy the intent, and select one of the solutions for execution. Then, the intent producer may send the selected solution to a device executing the intent, so that the device executing the intent executes the selected solution.

The intent consumer and/or the intent producer may be an AN device, or may be a CN device. For example, the intent consumer may be a network management service (network management service, NMS), an IDMS consumer (IDMS consumer), or a management service consumer (management service consumer, MnS consumer) (referred to as the MnS consumer for short below). The intent producer may be an element management service (element management service, EMS), an IDMS producer (IDMS producer), or a management service producer (management service producer, MnS producer) (referred to as the MnS producer for short below).

It should be understood that the intent consumer and the intent producer may alternatively use other names provided that a same function is provided. This is not limited in this application.

(7) An AN device is a device that connects a terminal device to a wireless network in a mobile communication system. As a node in a radio access network, the AN device may also be referred to as a base station, a radio access network (radio access network, RAN) node (or device), or an access point (access point, AP).

Currently, some examples of the AN device are: a new generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), or a baseband unit (baseband unit, BBU).

In addition, in a network structure, the AN device may include a central unit (central unit, CU) node and a distributed unit (distributed unit, DU) node. In this structure, protocol layers of the AN device are split. Functions of a part of protocol layers are controlled by a CU in a centralized manner. Functions of a part or all of remaining protocol layers are distributed in a DU, and the CU controls the DU in a centralized manner.

(8) A CN device is a network element included in a CN part in a mobile communication system. The CN device can connect a terminal device to different data networks, and perform services such as charging, mobility management, session management, and user plane forwarding. In mobile communication systems of different standards, names of CN devices that have a same function may be different. However, a specific name of a CN device that has each function is not limited in embodiments of this application.

For example, in a 4th generation (4th generation, 4G) mobile communication system (that is, long term evolution (long term evolution, LTE)), a network element that is responsible for functions such as access control, security control, and signaling coordination is a mobility management entity (Mobility management entity, MME), a network element serving as a local mobility management anchor is a serving gateway (serving gateway, S-GW), a network element serving as a handover anchor of an external data network and responsible for internet protocol (internet protocol, IP) address allocation is a packet data network (packet data network, PDN) gateway (PDN gateway, P-GW), a network element that stores user-related data and subscription data is a home subscriber server (home subscriber server, HSS), and a network element that is responsible for a policy and charging function is referred to as a policy and charging control rule function (policy and charging rule function, PCRF) network element.

For another example, in a 5th generation (5th generation, 5G) mobile communication system, a core network may be divided into a control plane (control plane, CP) and a user plane (user plane, UP) based on specific logical function division. A network element that is responsible for a control plane function in the CN may be collectively referred to as a control plane network element, and a network element that is responsible for a user plane function may be collectively referred to as a user plane network element. Specifically, on the user plane, a network element serving as an interface of a data network and responsible for functions such as user plane data forwarding is a user plane function (user plane function, UPF) network element. On the control plane, a network element that is responsible for access control and a mobility management function is referred to as an access and mobility management function (access and mobility management function, AMF) network element, a network element that is responsible for session management and policy execution control is referred to as a session management function (session management function, SMF) network element, a network element that is responsible for functions such as subscription data management and user access authorization is referred to as a unified data management (unified data management, UDM) network element, a network element that is responsible for charging and a policy control function is referred to as a policy control function (Policy and charging function, PCF) network element, and a network element that is responsible for transmitting a requirement of an application side for a network side is referred to as an application function (application function, AF) network element.

In embodiments of this application, unless otherwise specified, a quantity of nouns indicates "a singular noun or a plural noun", that is, "one or more". "At least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. "At least one of the following items (pieces)" or a similar expression thereof refers to any combination of these items (pieces), including any combination of singular items (pieces) or plural items (pieces).

In addition, it should be understood that in descriptions of this application, terms such as "first" and "second" are merely used for distinguishing and description, but should not be understood as an indication or implication of relative importance, or should not be understood as an indication or implication of a sequence.

The following describes a communication system to which embodiments of this application are applied with reference to the accompanying drawings.

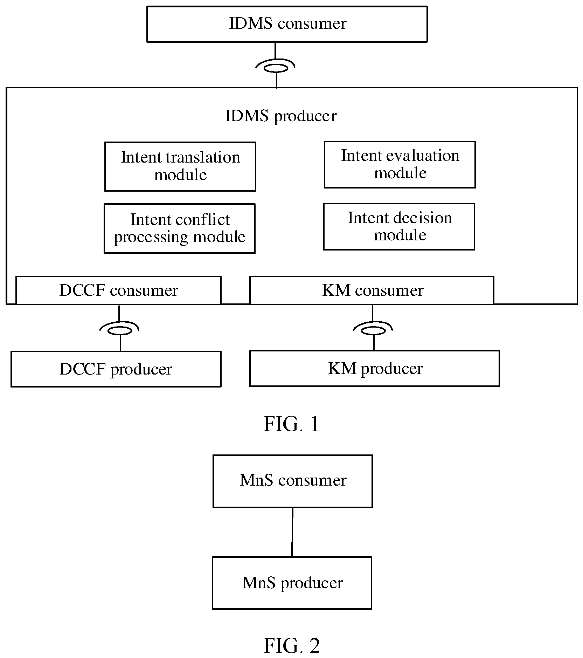

FIG. 1 shows an architecture of a possible communication system to which an intent processing method provided in embodiments of this application is applicable. As shown in FIG. 1, the communication system includes four parts: an IDMS consumer, an IDMS producer, a data collection and coordination function (data collection and coordination function, DCCF) producer (DCCF producer), and a knowledge management (knowledge management, KM) producer (KM producer). The following separately describes the four parts.

The IDMS consumer may implement a function of an intent consumer, and the IDMS producer may implement a function of an intent producer. For details, refer to the term explanation part. Details are not described herein again.

The DCCF producer is a device that provides a DCCF service. The DCCF service may include but is not limited to at least one of the following: a data collection service, a data sorting service, a data providing service, and the like.

The DCCF producer may provide the DCCF service for the IDMS producer over a DCCF consumer (DCCF consumer) in the IDMS producer. Specifically, when the DCCF consumer invokes the DCCF service, the DCCF producer provides the DCCF service (for example, provides data) for the IDMS producer over the DCCF consumer.

In this application, the DCCF producer may also be referred to as a DCCF.

The KM producer is a device that provides a KM service. The KM service may include but is not limited to at least one of the following: storing expert experience, storing information required for intent translation, providing stored information, and the like.

The KM producer may provide the KM service for the IDMS producer over a KM consumer (KM consumer) in the IDMS producer. Specifically, when the KM consumer invokes the KM service, the KM producer may provide the KM service for the IDMS producer over the KM consumer.

In this application, the KM producer may also be referred to as a KM module, a KM function, a KM server, or KM.

Optionally, the KM producer and the DCCF producer may be independent entities, or may be located in one entity with the IDMS producer.

Optionally, the IDMS producer further includes an intent translation (intent translation, IT) module, an intent evaluation (intent evaluation, IEv) module, an intent conflict resolution (intent conflict resolution, ICR) module, and an intent decision (intent decision, ID) module. The IT module, the IEv module, the ICR module, and the ID module may be independent entities, or may be virtual modules in one or more entities. The following describes the modules in detail.

The IT module may be configured to perform intent translation and generate a solution that can satisfy an intent. For example, the IT module obtains, from the KM function, information required for the intent translation. The information may be a correspondence between an intent and a policy. The IT module may determine a policy of the intent based on the correspondence and the intent obtained from the IDMS consumer. Then, the IT module may generate, according to the policy of the intent, at least one solution that can satisfy the intent.

The IEv module may evaluate implementation of the intent.

The ICR module may process an intent conflict. For example, the ICR module may determine whether an intent conflict exists between two intents.

The ID module may determine which solution of the intent is executed. For example, when the IT module generates at least one solution that can satisfy the intent, the ID module may randomly select, from the at least one solution, a solution that has no intent conflict with another intent for execution, or select, according to a preset policy, a solution that has no intent conflict with another intent for execution (for example, select a solution with a lowest delay or a solution with minimum energy consumption).

FIG. 2 shows an architecture of another possible communication system to which an intent processing method provided in embodiments of this application is applicable. As shown in FIG. 2, the communication system includes an MnS consumer and an MnS producer.

The MnS consumer may implement a function of the IDMS consumer in FIG. 1, and the MnS producer may implement a function of the IDMS producer and a function of an internal module of the IDMS producer in FIG. 1. For details, refer to descriptions of FIG. 1. Details are not described herein again.

It should be noted that the communication systems shown in FIG. 1 and FIG. 2 does not constitute a limitation on a communication system to which embodiments of this application are applicable. Therefore, the method provided in embodiments of this application is further applicable to communication systems of various standards, for example, an LTE communication system, a 5th generation (5th Generation, 5G) communication system, a 6th generation (6th Generation, 6G) communication system, a future communication system, vehicle to everything (vehicle to everything, V2X), long term evolution-vehicle (LTE-vehicle, LTE-V), vehicle to vehicle (vehicle to vehicle, V2V), an internet of vehicles, machine type communication (Machine Type Communication, MTC), internet of things (internet of things, IoT), long term evolution-machine to machine (LTE-machine to machine, LTE-M), machine to machine (machine to machine, M2M), internet of things, and the like. In addition, it should be further noted that names of network elements in the communication system are not limited in embodiments of this application either. For example, in communication systems of different standards, the network elements may have other names. For another example, when a plurality of network elements are integrated into a same physical device, the physical device may have another name.

The following describes the solutions provided in this application with reference to the accompanying drawings.

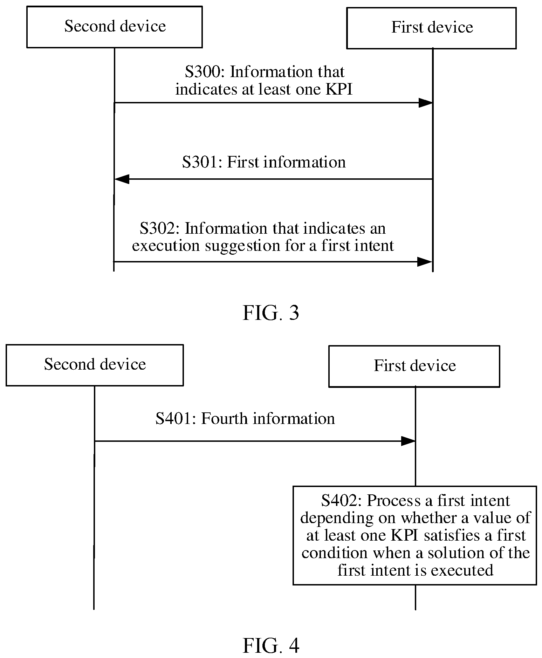

An embodiment of this application provides an intent processing method. The method may be applied to the communication system shown in FIG. 1 or FIG. 2. The following describes a procedure of the method in detail with reference to a flowchart shown in FIG. 3.

S301: A first device sends first information to a second device. Correspondingly, the second device receives the first information from the first device.

The first device may be an intent producer, and the second device may be an intent consumer.

The first information may indicate impact on at least one KPI when a solution of a first intent is executed.

The solution of the first intent may be at least one solution that can satisfy the first intent.

For example, the solution of the first intent may be the at least one solution that is generated by the first device and that can satisfy the first intent. The first device may generate, after receiving an intent creation request for the first intent and from the second device, the at least one solution that can satisfy the first intent.

For another example, the solution of the first intent may be a solution of the first intent that is currently being executed by the first device.

Optionally, the at least one KPI includes at least one of the following: a throughput, a throughput volume, energy consumption, bandwidth usage, a delay, and a packet loss rate.

Optionally, the impact on the at least one KPI when the solution of the first intent is executed is a value of the at least one KPI when the solution of the first intent is executed. The first information includes: information that indicates the value of the at least one KPI when the solution of the first intent is executed, and/or information that indicates an offset of the at least one KPI when the solution of the first intent is executed, and information that indicates a current value of the at least one KPI.

The offset of the at least one KPI when the solution of the first intent is executed may be a value (the value may be an integer, a negative number, or 0) of a change of the at least one KPI when the solution of the first intent is executed, or may be a percentage of a change of the at least one KPI when the solution of the first intent is executed.

Optionally, the first information may be carried in an existing message, or may be carried in a new message. This is not limited in this application.

S302: The second device sends, to the first device, information that indicates an execution suggestion for the first intent. Correspondingly, the first device receives the information that indicates the execution suggestion for the first intent and that is from the second device.

The execution suggestion may include: stopping executing the first intent, or executing a first solution of the first intent.

For example, the information that indicates the execution suggestion for the first intent includes a first field. When a value of the first field is a first value, the execution suggestion is stopping executing the first intent.

For another example, the information that indicates the execution suggestion for the first intent includes a first field and a second field. When a value of the first field is a second value, and a value of the second field is the first solution, the execution suggestion is executing the first solution of the first intent.

For another example, the information that indicates the execution suggestion for the first intent includes a second field. When a value of the second field is the first solution, the execution suggestion is executing the first solution of the first intent.

Optionally, after receiving the information that indicates the execution suggestion for the first intent and that is from the second device, the first device may process the first intent based on the execution suggestion. For example, when the execution suggestion includes stopping executing the first intent, the first device may stop executing the first intent. For another example, when the execution suggestion includes executing the first solution of the first intent, the first device may execute the first solution to satisfy the first intent.

Optionally, the information that indicates the execution suggestion for the first intent may be carried in an existing message (for example, an intent modification request), or may be carried in a new message. This is not limited in this application.

According to the foregoing method embodiment, after sending, to the second device, the first information that indicates the impact on the at least one KPI when the solution of the first intent is executed, the first device receives the information that indicates the execution suggestion for the first intent and that is from the second device. In this way, the second device may determine the execution suggestion for the first intent based on the impact on the at least one KPI when the solution of the first intent is executed. For example, the second device may select a solution that can satisfy a requirement (in other words, a condition that the at least one KPI needs to satisfy) of the second device for the at least one KPI in a network to which a device executing the first intent belongs, and suggest the first device to select the solution. Therefore, according to the foregoing method embodiment, it can avoid a case in which when the solution of the first intent is executed, the at least one KPI does not satisfy the requirement of the second device for the at least one KPI in the network to which the device executing the first intent belongs, and therefore ensure performance of the network to which the device executing the first intent belongs.

Optionally, S301 may be implemented in the following manners.

Implementation 1: The first device may send the first information to the second device after generating, based on the intent creation request from the second device, the at least one solution that can satisfy the first intent.

Optionally, in the implementation 1, when sending the first information to the second device, the first device has not started to execute the solution of the first intent. The impact on the at least one KPI when the solution of the first intent is executed may be predicted impact on the at least one KPI when the solution of the first intent is executed.

The first information may include: the information that indicates the value of the at least one KPI when the solution of the first intent is executed, and/or the information that indicates the offset of the at least one KPI when the solution of the first intent is executed, and the information that indicates the current value of the at least one KPI.

Optionally, the first device may determine the first information by using the following methods.

A1: The first device receives second information from a third device.

The third device may be a KM.

Optionally, the second information indicates at least one of the following: the offset of the at least one KPI when the solution of the first intent is executed, or an offset of the at least one KPI when at least one operation in the solution of the first intent is executed.

The offset of the at least one KPI when the at least one operation in the solution of the first intent is executed may be one of the following: a value (the value may be an integer, a negative number, or 0) of a change of the at least one KPI when the at least one operation in the solution of the first intent is performed, or a percentage of the change of the at least one KPI when the at least one operation in the solution of the first intent is executed.

Optionally, the second information in the third device may be pre-stored in the third device by a system manager, or may be detected and sent to the third device by the first device or another device when the first device or the another device executes the solution of the first intent.

The system manager may store the second information in the third device by using the following method: The system manager sends an intent knowledge update request to the third device. The intent knowledge update request may include information that indicates an offset of a KPI when a solution or an operation in the solution is executed. For example, the information indicates that energy consumption is reduced by 10%, and a throughput is increased by 15%. For another example, the information indicates that energy consumption is increased by 15%, and a throughput is reduced by 10%. After updating a database based on the intent knowledge update request, the third device may send an intent knowledge update response to the system manager, to indicate that the update is completed.

A2: The first device receives third information that indicates the current value of the at least one KPI and that is from a fourth device.

The fourth device may be a DCCF.

A3: The first device determines the first information based on the second information and the third information.

In some possible implementations, when the first information includes the information that indicates the value of the at least one KPI when the solution of the first intent is executed, the first device may determine, based on the second information and the third information, the value of the at least one KPI when the solution of the first intent is executed, to determine the first information.

Specifically, the first device may determine, based on the second information, the offset of the at least one KPI when the solution of the first intent is executed, and determine the current value of the at least one KPI based on the third information. Then, the first device may calculate, based on the offset of the at least one KPI when the solution of the first intent is executed and the current value of the at least one KPI, the value of the at least one KPI when the solution of the first intent is executed.

For example, when the third information indicates that a current value of a throughput is 10 kilobits per second (kps), and the second information indicates that an offset of the throughput is -2 kps when the solution of the first intent is executed, a value of the throughput is 8 kps when the solution of the first intent is executed.

For another example, when the third information indicates that a current value of a throughput is 10 kps, and the second information indicates that an offset of the throughput is -10% when the solution of the first intent is executed, a value of the throughput is 9 kps when the solution of the first intent is executed.

Optionally, when the second information indicates the offset of the at least one KPI when the at least one operation in the solution of the first intent is executed, the first device performs a weighting operation on the offset of the at least one KPI when the at least one operation in the solution of the first intent is executed, to determine the offset of the at least one KPI when the solution of the first intent is executed.

In some other possible implementations, when the first information includes: the information that indicates the offset of the at least one KPI when the solution of the first intent is executed, and the information indicates the current value of the at least one KPI, the first device may determine that the first information includes the second information and the third information.

According to the implementation 1, the second device may provide an execution suggestion for the first intent for the first device when an intent is created. The execution suggestion may be determined by the second device based on the impact on the at least one KPI when the solution of the first intent is executed. This can avoid a case in which when the intent is created and the solution of the first intent is executed, the at least one KPI does not satisfy the requirement of the second device for the at least one KPI in the network to which the device executing the first intent belongs, and therefore ensure performance of the network to which the device executing the first intent belongs.

Implementation 2: The first device may send the first information to the second device when executing the solution of the first intent.

The first information may include the information that indicates the value of the at least one KPI when the solution of the first intent is executed.

The value of the at least one KPI when the solution of the first intent is executed may be a value of the at least one KPI that is detected by the first device when the solution of the first intent is executed.

According to the implementation 2, the first device may detect the value of the at least one KPI when the solution of the first intent is executed, and send the detected value of the at least one KPI to the second device. In this way, the second device may determine the execution suggestion for the first intent based on the detected value of the at least one KPI. This can avoid a case in which when the solution of the first intent is executed, the at least one KPI does not satisfy the requirement of the second device for the at least one KPI in the network to which the device executing the first intent belongs, and therefore ensure performance of the network to which the device executing the first intent belongs.

Optionally, in an implementation scenario of the foregoing embodiment, before S301, the method further includes the following steps.

S300: The second device sends, to the first device, information that indicates the at least one KPI. Correspondingly, the first device receives the information that indicates the at least one KPI and that is from the second device.

Optionally, the information that indicates the at least one KPI includes at least one of the following:
the at least one KPI; and
an identifier and/or an intent expression of a second intent, where the second intent indicates the at least one KPI.

The first device may determine the at least one KPI based on the information that indicates the at least one KPI. For example, when the first device determines, based on the identifier and/or the intent expression of the second intent, that the second intent is to guarantee that a throughput is greater than or equal to 10 kps, the first device may determine that the at least one KPI includes the throughput. For another example, when the first device determines, based on the identifier and/or the intent expression of the second intent, that the second intent is that a delay < 5 milliseconds (ms), the first device may determine that the at least one KPI includes the delay.

Optionally, the information that indicates the at least one KPI may be carried in an existing message (for example, the intent creation request or the intent modification request), or may be carried in a new message. This is not limited in this application.

According to the method, the first device may feed back, to the second device, only the impact of executing the solution of the first intent on the at least one KPI indicated by the information that indicates the at least one KPI, and does not need to feed back impact of executing the solution of the first intent on all KPIs, to save transmission resources.

Optionally, before S302, the second device may determine the execution suggestion by using the following methods.

B1: The second device determines, based on the first information, the impact on the at least one KPI when the solution of the first intent is executed.

The impact on the at least one KPI when the solution of the first intent is executed may be the value of the at least one KPI when the solution of the first intent is executed.

B2: The second device determines the execution suggestion depending on whether the value of the at least one KPI when the solution of the first intent is executed satisfies a first condition.

The first condition is a condition that the at least one KPI needs to satisfy (in other words, the requirement of the second device for the at least one KPI in the network to which the device executing the solution of the intent belongs).

Optionally, the second device may obtain, in the following manners, the condition that the at least one KPI needs to satisfy. The condition that the at least one KPI needs to satisfy may be a value range of the at least one KPI.

Manner 1: The second device obtains, by using the second intent, the condition that the at least one KPI needs to satisfy.

Specifically, when the intent expression of the second intent includes information that can indicate a target value, the target value may be used to reflect the condition that the at least one KPI needs to satisfy. For example, when the second intent is to guarantee that the throughput is greater than or equal to 10 kps, a target value of the throughput is greater than or equal to 10 kps, and the throughput needs to satisfy a condition of being greater than or equal to 10 kps. For another example, when the second intent is that a delay < 5 ms, a target value of the delay is less than 5 ms, and the delay needs to satisfy a condition of being less than 5 ms.

Manner 2: The second device obtains, based on a network configuration, the condition that the at least one KPI needs to satisfy.

For example, when bandwidth usage configured for a device by a network is not less than 10%, the bandwidth usage needs to satisfy a condition of being not less than 10%.

Optionally, B2 may be implemented in the following methods.

Optionally, when there is a solution that satisfies a second condition in solutions of the first intent, the second device selects, from the solution that satisfies the second condition, the first solution that is used to satisfy the first intent, and determines, based on this, that the execution suggestion is executing the first solution of the first intent. The second condition is that the at least one KPI satisfies the first condition when the solution of the first intent is executed.

For example, the solutions of the first intent include a solution 1 and a solution 2, and the at least one KPI is a throughput. When a value of the throughput is 8 kps when the solution 1 is executed, the value of the throughput is 10 kps when the solution 2 is executed, and the throughput needs to satisfy a condition of being greater than or equal to 10 kps, the second device may determine that the execution suggestion is executing the solution 2 of the first intent.

When there are a plurality of solutions that satisfy the second condition in the solutions of the first intent, the second device may randomly select one solution (namely, the first solution) from the plurality of solutions, or the second device selects one solution (namely, the first solution) from the plurality of solutions according to a preset policy (for example, selects a solution with a lowest delay or a solution with minimum energy consumption).

Optionally, when there is no solution that satisfies the second condition in the solutions of the first intent, the second device may determine that the execution suggestion is stopping executing the first intent. The second condition is that the at least one KPI satisfies the first condition when the solution of the first intent is executed.

For example, the solutions of the first intent include a solution a and a solution b, and the at least one KPI is a throughput. When a value of the throughput is 8 kps when the solution a is executed, the value of the throughput is 9 kps when the solution b is executed, and the throughput needs to satisfy a condition of being greater than or equal to 10 kps, the second device may determine that the execution suggestion is stopping executing the first intent.

Optionally, when there is no solution that satisfies the second condition in the solutions of the first intent, the second device may determine, by using at least one of the following methods, that the execution suggestion is executing the first solution of the first intent: selecting a solution (namely, the first solution) with a smallest quantity of first KPIs from the solutions of the first intent; selecting a solution (namely, the first solution) with a smallest quantity of third intents from the solutions of the first intent; and selecting, from the solutions of the first intent, a solution (namely, the first solution) with a minimum difference between the first KPI and a condition that the first KPI needs to satisfy when the solution of the first intent is executed. The second condition is that the at least one KPI satisfies the first condition when the solution of the first intent is executed; when the solution of the first intent is executed, the first KPI does not satisfy the condition that the first KPI needs to satisfy; and the third intent is an intent associated with the first KPI.

For example, the solutions of the first intent include a solution 3 and a solution 4, and the at least one KPI is a throughput and a delay. When the solution 3 is executed, a value of the throughput is 8 kps, and the delay is 6 ms; and when the solution 4 is executed, the value of the throughput is 9 kps, and the delay is 4 ms. The throughput needs to satisfy a condition of being greater than or equal to 10 kps, and the delay needs to satisfy a condition of being lower than 5 ms. In this case, when the solution 3 is executed, the first KPI includes the throughput and the delay, and when the solution 4 is executed, the first KPI includes the throughput. Therefore, the second device may select a solution (namely, the solution 4) with a smallest quantity of first KPIs, to determine that the execution suggestion is executing the solution 4 of the first intent.

For another example, the solutions of the first intent include a solution 5 and a solution 6, and the at least one KPI is a throughput and a delay. When the solution 5 is executed, a value of the throughput is 8 kps, and the delay is 6 ms; and when the solution 6 is executed, the value of the throughput is 9 kps, and the delay is 4 ms. The throughput needs to satisfy a condition of being greater than or equal to 10 kps, and the delay needs to satisfy a condition of being lower than 5 ms. In this case, when the solution 5 is executed, the first KPI includes the throughput and the delay, and when the solution 6 is executed, the first KPI includes the throughput. The throughput is related to an intent 1, and the delay is related to an intent 2. Therefore, when the solution 5 is executed, the third intent includes the intent 1 and the intent 2, and when the solution 6 is executed, the third intent includes the intent 1. The second device may select a solution (namely, the solution 6) with a smallest quantity of third intents, to determine that the execution suggestion is executing the solution 6 of the first intent.

For another example, the solutions of the first intent include a solution 7 and a solution 8, and the at least one KPI is a throughput and a delay. When the solution 7 is executed, a value of the throughput is 8 kps, and the delay is 3 ms; and when the solution 8 is executed, the value of the throughput is 9 kps, and the delay is 4 ms. The throughput needs to satisfy a condition of being greater than or equal to 10 kps, and the delay needs to satisfy a condition of being lower than 5 ms. In this case, when the solution 7 is executed, a difference between the throughput of the first KPI and a condition that the throughput of the first KPI needs to satisfy is -2 kps, and when the solution 8 is executed, a difference between the throughput of the first KPI and a condition that the throughput of the first KPI needs to satisfy is -1 kps. Therefore, the second device may determine that the execution suggestion is executing the solution 8 of the first intent.

According to the method, the second device may determine the execution suggestion for the first intent based on the impact on the at least one KPI when the solution of the first intent is executed. For example, the second device may select the solution that can satisfy the requirement (in other words, the condition that the at least one KPI needs to satisfy) of the second device for the at least one KPI in the network to which the device executing the first intent belongs, and suggest the first device to select the solution. Therefore, according to the method, it can avoid a case in which when the solution of the first intent is executed, the at least one KPI does not satisfy the requirement of the second device for the at least one KPI in the network to which the device executing the first intent belongs, and therefore ensure the performance of the network to which the device executing the first intent belongs.

Optionally, in an implementation scenario of the foregoing embodiment, after the first device executes the first solution, the method further includes: The first device sends, to the KM, information that indicates an offset of the at least one KPI when the first solution is executed.

The offset of the at least one KPI when the first solution is executed may be detected by the first device when the first solution is executed.

According to the method, the first device may update, based on detected data, the offset of the at least one KPI in the KM when the first solution is executed, to improve accuracy of data in the KM.

An embodiment of this application further provides an intent processing method. The method may be applied to the communication system shown in FIG. 1 or FIG. 2. The following describes a procedure of the method in detail with reference to a flowchart shown in FIG. 4.

S401: A second device sends fourth information to a first device. Correspondingly, the first device receives the fourth information from the second device.

The first device may be an intent producer, and the second device may be an intent consumer.

The fourth information may indicate a condition (for ease of description, referred to as a first condition below) that at least one KPI needs to satisfy.

For specific content of the at least one KPI and the condition that the at least one KPI needs to satisfy, refer to the method shown in FIG. 3. Details are not described herein again.

Optionally, the fourth information includes:
the at least one KPI, and information that indicates the first condition that the at least one KPI needs to satisfy; and/or
an identifier and/or an intent expression of a second intent, where the second intent indicates the first condition that the at least one KPI needs to satisfy.

The first device may determine, based on the fourth information, the first condition that the at least one KPI needs to satisfy. For example, when the first device determines, based on the identifier and/or the intent expression of the second intent, that the second intent is to guarantee that a throughput is greater than or equal to 10 kps, the first device may determine that the at least one KPI includes the throughput, and the throughput needs to satisfy a condition of being greater than or equal to 10 kps. For another example, when the first device determines, based on the identifier and/or the intent expression of the second intent, that the second intent is that a delay < 5 ms, the first device may determine that the at least one KPI includes the delay, and the delay needs to satisfy a condition of being lower than 5 ms.

The fourth information may be carried in an existing message (for example, an intent creation request or an intent modification request), or may be carried in a new message. This is not limited in this application.

S402: The first device processes a first intent depending on whether a value of the at least one KPI satisfies the first condition when a solution of the first intent is executed.

Specifically, when there is a solution that satisfies a second condition in solutions of the first intent, the first device selects, from the solutions that satisfy the second condition, a first solution that is used to satisfy the first intent, and executes the first solution. When there is no solution that satisfies the second condition in the solutions of the first intent, the first device may determine not to execute the first intent. The second condition is that the at least one KPI satisfies the first condition when the solution of the first intent is executed.

Optionally, when there are a plurality of solutions that satisfy the second condition in the solutions of the first intent, the first device may randomly select one solution (namely, the first solution) from the plurality of solutions, or the first device selects one solution (namely, the first solution) from the plurality of solutions according to a preset policy (for example, selects a solution with a lowest delay or a solution with minimum energy consumption).

For a method in which the first device determines the value of the at least one KPI when the solution of the first intent is executed, refer to the method shown in FIG. 3. For specific content of the solution of the first intent, refer to the method shown in FIG. 3. Details are not described herein again.

Optionally, after S402, the method further includes: The first device sends, to a KM, information that indicates an offset of the at least one KPI when the first solution is executed. For specific content, refer to the method shown in FIG. 3. Details are not described herein again.

Optionally, after S402, after executing the first solution, the first device may adjust the solution of the first intent based on impact of executing the first solution on the at least one KPI. Specifically, the first device may detect the value of the at least one KPI when the first solution is executed. When the detected value of the at least one KPI satisfies the first condition when the first solution is executed, the first device may continue executing the first solution; and/or when the detected value of the at least one KPI does not satisfy the first condition when the first solution is executed, the first device may perform S402, in other words, reselect the solution of the first intent.

According to the foregoing method embodiment, the first device may process the first intent based on the impact on the at least one KPI when the solution of the first intent is executed. For example, the first device may select a solution that can satisfy a requirement (in other words, a condition that the at least one KPI needs to satisfy) of the second device for the at least one KPI in a network to which a device executing the first intent belongs for execution. Therefore, according to the foregoing method embodiment, it can avoid a case in which when the solution of the first intent is executed, the at least one KPI does not satisfy the requirement of the second device for the at least one KPI in the network to which the device executing the first intent belongs, and therefore ensure performance of the network to which the device executing the first intent belongs.

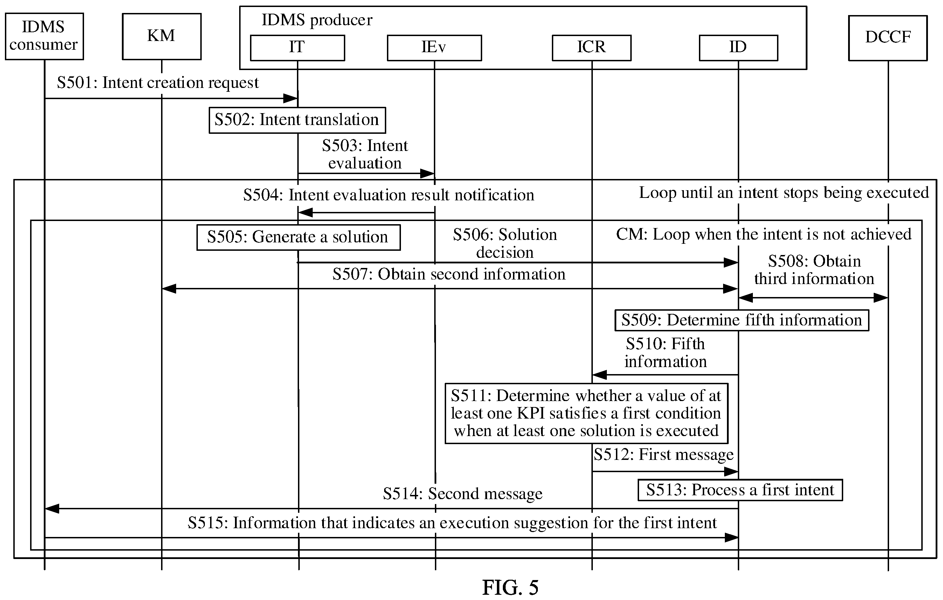

An embodiment of this application further provides an intent processing method. The method may be applied to the communication system shown in FIG. 1 or FIG. 2. The method shows a possible implementation of the methods shown in FIG. 3 and FIG. 4. Refer to a flowchart shown in FIG. 5, an example in which a first device is an IDMS producer, a second device is an IDMS consumer, a third device is a KM, and a fourth device is a DCCF is used below to describe this embodiment of this application.

S501: The IDMS consumer sends an intent creation request to an IT module.

The intent creation request may be used to request the IDMS producer to satisfy a first intent.

Optionally, the intent creation request includes an intent expression of the first intent.

S502: The IT module performs intent translation on the first intent, and determines a policy of the first intent.

Optionally, the IT module may obtain the policy of the first intent from the KM.

S503: The IT module sends an intent evaluation message to an IEv module.

The intent evaluation message may include an identifier of the first intent, and is used to request the IEv module to evaluate a completion status of the first intent.

S504: The IEv module sends an intent evaluation result notification to the IT module.

The intent evaluation result notification may include the identifier of the first intent and information that indicates a satisfaction status of the first intent.

Optionally, when the information that indicates the satisfaction status of the first intent indicates that the first intent is not satisfied, steps S505 to S515 may be performed. When the information that indicates the satisfaction status of the first intent indicates that the first intent is already satisfied, before stopping implementing the first intent, the IEv module may periodically or aperiodically determine the satisfaction status of the first intent, and send the intent evaluation result notification to the IT module.

S505: The IT module generates a solution that can satisfy the first intent.

The IT module may generate, according to the policy determined in S502, at least one solution that can satisfy the first intent.

S506: The IT module sends a solution decision message to an ID module.

The solution decision message may include the at least one solution, and is used to request the ID module to determine, for the first intent, a solution to be executed.

S507: The ID module obtains, from the KM, second information that indicates an offset of at least one KPI when the at least one solution is executed.

For specific content of the second information, refer to the method shown in FIG. 3. Details are not described herein again.

S507 may be implemented by using the following procedures.

E1: The ID module sends a first request to the KM.

The first request may include the at least one solution.

E2: The KM sends a first response to the ID module.

The first response may include the second information.

For example, when solutions of the first intent include a solution 1 and a solution 2 and the at least one KPI includes a KPI 1 and a KPI 2, a representation form of the second information may be: (<solution 1: <KPI 1, offset>, <KPI 2, offset>> and <solution 2: <KPI 1, offset>, <KPI 2, offset>>).

S508: The ID module obtains, from the DCCF, third information that indicates a current value of the at least one KPI.

S508 may be implemented by using the following procedures.

F1: The ID module sends a second request to the DCCF.

The second request may include the at least one KPI to indicate a KPI whose current value needs to be obtained.

F2: The DCCF sends a second response to the ID module.

The second response may include the third information. The third information may include the at least one KPI and the current value corresponding to the at least one KPI.

For example, when the at least one KPI includes a KPI 1 and a KPI 2, a representation form of the third information may be: (<KPI 1, value>, <KPI 2, value>).

S509: The ID module determines, based on the second information and the third information, a value of the at least one KPI when the at least one solution is executed, to determine fifth information that indicates the value of the at least one KPI when the at least one solution is executed.

The fifth information may be the first information in the implementation 1 of the method shown in FIG. 3.

For a specific implementation of S509, refer to the method shown in FIG. 3. Details are not described herein again.

S510: The ID module sends the fifth information to an ICR module.

For example, when the solutions of the first intent include a solution 1 and a solution 2, and the at least one KPI includes a KPI 1 and a KPI 2, a representation form of the fifth information may be: (<solution 1: <KPI 1, value>, <KPI 2, value>> and <solution 2: <KPI 1, value>, <KPI 2, value>>).

S511: The ICR module determines whether the value of the at least one KPI satisfies, when the at least one solution is executed, a condition (namely, a first condition) that the at least one KPI needs to satisfy.

For specific content of S511, refer to the method in FIG. 4. Details are not described herein again.

In addition, depending on whether the value of the at least one KPI satisfies the first condition when the solution of the first intent is executed, the ICR module may determine whether the solution affects satisfaction of an intent associated with the at least one KPI.

Specifically, when the solution of the first intent is executed and the value of the at least one KPI satisfies the first condition, the solution of the first intent does not affect the satisfaction of the intent associated with the at least one KPI; or when the solution of the first intent is executed and the value of the at least one KPI does not satisfy the first condition, the solution of the first intent affects the satisfaction of the intent associated with the at least one KPI.

For example, the at least one KPI includes a throughput, and a fourth intent is to guarantee that the throughput is greater than or equal to 10 kps. If the throughput is greater than or equal to 10 kbs when the solution of the first intent is executed, execution of the solution of the first intent does not affect satisfaction of the fourth intent. If the throughput is less than 10 kbs when the solution of the first intent is executed, the execution of the solution of the first intent affects the satisfaction of the fourth intent.

S512: The ICR module sends a first message to the ID module.

The first message may include information that indicates whether the value of the at least one KPI satisfies the first condition when the solution of the first intent is executed.

For example, when the solutions of the first intent include a solution 1 and a solution 2, and the at least one KPI includes a KPI 1 and a KPI 2, a representation form of the information that indicates whether the value of the at least one KPI satisfies the first condition when the solution of the first intent is executed may be: (<solution 1: Whether a value of the KPI 1 satisfies a condition that the KPI 1 needs to satisfy, and whether a value of the KPI 2 satisfies a condition that the KPI 2 needs to satisfy>, and <solution 2: Whether a value of the KPI 1 satisfies a condition that the KPI 1 needs to satisfy, and whether a value of the KPI 2 satisfies a condition that the KPI 2 needs to satisfy>).

Optionally, the first message further includes information that indicates whether the execution of the solution of the first intent affects satisfaction of another intent.

For example, when the solutions of the first intent include a solution 1 and a solution 2, and the intent associated with the at least one KPI includes an intent 1 and an intent 2, a representation form of the information that indicates whether the execution of the solution of the first intent affects the satisfaction of another intent may be: (<solution 1: <intent 1, whether satisfaction of the intent 1 is affected (Yes/No)> <intent 2, whether the satisfaction of the intent 1 is affected (Yes/No)>>, and <solution 2: <intent 1, whether satisfaction of the intent 1 is affected (Yes/No)> <intent 2, whether the satisfaction of the intent 1 is affected (Yes/No)>>).

S513: The ID module processes the first intent based on the first message.

For example, the ID may select, a solution that does not affect satisfaction of another intent, as a solution that satisfies the first intent.

For specific content of S513, refer to the method in FIG. 4. Details are not described herein again.

Optionally, when the ID module selects no solution used to satisfy the first intent (corresponding to stopping executing the first intent in the method shown in FIG. 4), S514 and S515 may be performed.

S514: The ID module sends a second message to the IDMS consumer.

The second message may include the identifier of the first intent and the fifth information.

Optionally, the second message further includes the information that indicates whether the execution of the solution of the first intent affects satisfaction of another intent.

S515: The IDMS consumer sends, to the ID module, information that indicates an execution suggestion for the first intent.

For specific content of S515, refer to the method in FIG. 3. Details are not described herein again.

Optionally, when the ID module fails to select, according to S505 to S515, the solution used to satisfy the first intent, S505 to S515 may be repeatedly performed until the ID module selects the solution used to satisfy the first intent.

According to the method, when selecting the solution used to satisfy the first intent, the IDMS producer may select a solution that can satisfy a requirement of the IDMS consumer for the at least one KPI (in other words, the condition that the at least one KPI needs to satisfy) in a network to which a device executing the first intent belongs. Therefore, according to the method, it can avoid a case in which when the solution of the first intent is executed, the at least one KPI does not satisfy the requirement of the IDMS consumer for the at least one KPI in the network to which the device executing the first intent belongs, and therefore ensure performance of the network to which the device executing the first intent belongs.

In addition, the IDMS producer may preferentially select, in an intent creation process, a solution that does not affect satisfaction of another intent, in other words, preferentially select a solution that has no conflict in effect with the another intent. This can avoid affecting the satisfaction of the another intent, and further ensure the performance of the network to which the device executing the first intent belongs.

In addition, when the IDMS producer selects no proper solution, the IDMS producer may send, to the IDMS consumer, the information that indicates the impact on the at least one KPI when the solution of the first intent is executed. The IDMS consumer may determine the execution suggestion for the first intent based on the impact on at least one KPI when the solution of the first intent is executed, and send execution suggestion information to the IDMS producer. This can avoid a case in which when the solution of the first intent is executed, the at least one KPI does not satisfy the requirement of the IDMS consumer for the at least one KPI in the network to which the device executing the first intent belongs, and therefore ensure the performance of the network to which the device executing the first intent belongs.

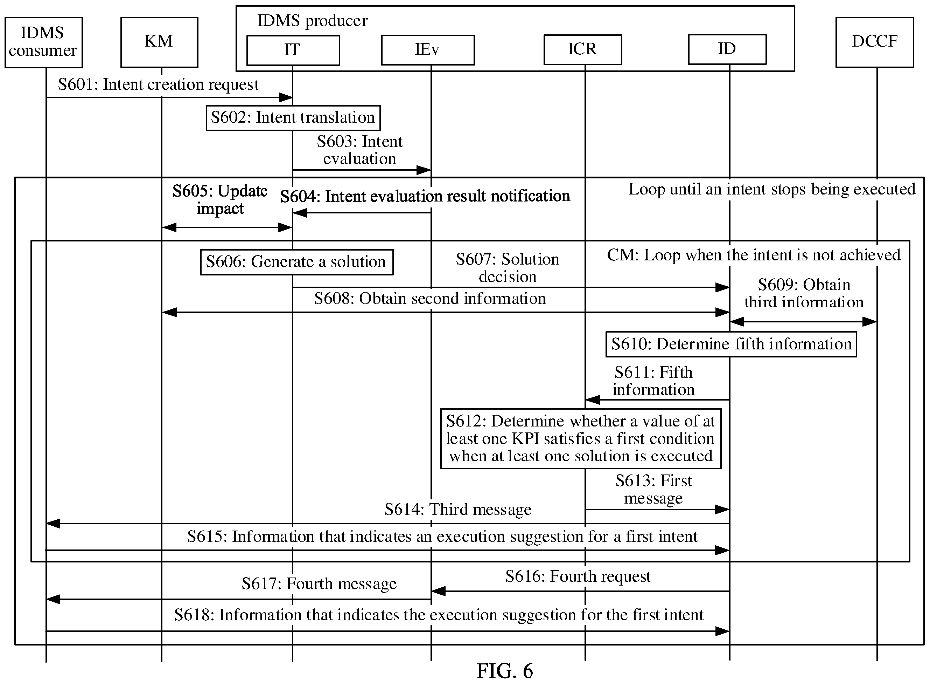

An embodiment of this application further provides an intent processing method. The method may be applied to the communication system shown in FIG. 1 or FIG. 2. The method shows another possible implementation of the method shown in FIG. 3. Refer to a flowchart shown in FIG. 6, an example in which a first device is an IDMS producer, a second device is an IDMS consumer, a third device is a KM, and a fourth device is a DCCF is used below to describe this embodiment of this application. In comparison with the embodiment shown in FIG. 5, in the method shown in FIG. 6, in an intent creation process, the IDMS consumer provides an execution suggestion for a first intent for the IDMS producer. After executing a solution of the first intent, the IDMS producer may feed back, to the IDMS consumer, information that indicates impact on at least one KPI when the solution of the first intent is executed. In addition, an IT module in the IDMS producer may send, to the KM, information that indicates an offset of the at least one KPI when the solution of the first intent is executed.

S601: The IDMS consumer sends an intent creation request to an IT module.

The intent creation request may be used to request the IDMS producer to satisfy a first intent.

Optionally, the intent creation request includes an intent expression of the first intent.

In addition, the intent creation request may further include a first indication. The first indication indicates the IDMS producer to feed back sixth information, and the sixth information indicates the impact on the at least one KPI when the solution of the first intent is executed.

The sixth information may be the first information in the implementation 2 of the method shown in FIG. 3.

Optionally, the first indication includes information that indicates the at least one KPI. For specific content of the information that indicates the at least one KPI, refer to the method shown in FIG. 3. Details are not described herein again.

Optionally, the first indication may alternatively be included in another message (for example, an intent modification request) sent by the IDMS consumer to the IT module.

S602: The IT module performs intent translation on the first intent, and determines a policy of the first intent.

S603: The IT module sends an intent evaluation message to an IEv module.

The intent evaluation message may include an identifier of the first intent, and is used to request the IEv module to evaluate a completion status of the first intent.

Optionally, the intent evaluation message further includes the first indication, to indicate the IEv module to evaluate the impact on the at least one KPI when the solution of the first intent is executed.

S604: The IEv module sends an intent evaluation result notification to the IT module.

For specific content of S604, refer to S504. The following describes only a difference.

Optionally, the intent evaluation result notification further includes the sixth information.

For example, if a currently executed solution of the first intent is a solution 1, and the at least one KPI includes a KPI 1 and a KPI 2, a representation form of the sixth information may be: (the identifier of the first intent: <solution 1: <KPI 1, offset> and <KPI 2, offset>>).

Optionally, when the intent evaluation result notification includes information that indicates that the first intent is not satisfied, steps S605 to S615 may be performed. When the intent evaluation result notification includes information that indicates that the first intent is already satisfied, before stopping implementing the first intent, the IEv module may periodically or aperiodically determine whether the first intent is satisfied, and send the intent evaluation result notification to the IT module.

S605: The IT module requests the KM to update the impact on the at least one KPI when the solution of the first intent is executed.

S605 may be implemented by using the following procedures.

G1: The IT module sends a third request to the KM.

The third request may include the sixth information.

G2: The KM sends a third response to the IT module.

The third response indicates that the KM already updates the impact on the at least one KPI when the solution of the first intent is executed.

S606: The IT module generates a solution that can satisfy the first intent.

S607: The IT module sends a solution decision message to an ID module.

S608: The ID module obtains, from the KM, second information that indicates an offset of the at least one KPI when the at least one solution is executed.

S609: The ID module obtains, from the DCCF, third information that indicates a current value of the at least one KPI.

S610: The ID module determines, based on the second information and the third information, a value of the at least one KPI when the at least one solution is executed, to determine fifth information that indicates the value of the at least one KPI when the at least one solution is executed.

S611: The ID module sends the fifth information to an ICR module.

S612: The ICR module determines whether the value of the at least one KPI satisfies a condition (namely, a first condition) that the at least one KPI needs to satisfy when the at least one solution is executed.

S613: The ICR module sends a first message to the ID module.

For specific content of S606 to S613, refer to S505 to S512. Details are not described herein again.

S614: The ID module sends a third message to the IDMS consumer.

The third message may include the identifier of the first intent and the fifth information.

Optionally, the third message further includes information that indicates whether execution of the solution of the first intent affects satisfaction of another intent.

S615: The IDMS consumer sends, to the ID module, information that indicates an execution suggestion for the first intent.

For specific content of S614 and S615, refer to the method in FIG. 3. Details are not described herein again.

Optionally, when the IDMS consumer fails to select, according to S605 to S615, the solution used to satisfy the first intent for the IDMS producer, S605 to S615 may be repeatedly performed until the solution used to satisfy the first intent is selected.

Optionally, when the execution suggestion is to execute a first solution of the first intent, the method further includes S616 to S618.

S616: The ID module sends a fourth request to the IEv module.

The fourth request may be used to request the IEv module to determine a value of the at least one KPI when the first solution is executed.

Optionally, the fourth request includes at least one of the following: the identifier of the first intent, an identifier of an intent that needs to be determined whether to be affected by the first solution, and the at least one KPI.

S617. The IEv module sends a fourth message to the IDMS consumer.

The fourth message may include the identifier of the first intent and the sixth information.

The sixth information may indicate the value of the at least one KPI when the first solution is executed. It may be understood that the sixth information is the first information in the implementation 2 of the method shown in FIG. 3.

Optionally, the fourth message further includes the information that indicates whether the execution of the first solution of the first intent affects satisfaction of another intent.

S618: The IDMS consumer sends, to the ID module, information that indicates an execution suggestion for the first intent.

The information that indicates the suggestion for the first intent may be carried in intent deactivation or an intent modification notification message.

For specific content of S617 and S618, refer to the method in FIG. 3. Details are not described herein again.

According to the method, in the intent creation process, the IDMS producer may send, to the IDMS consumer, the information that indicates the impact on the at least one KPI when the solution of the first intent is executed. Then, the IDMS consumer determines the execution suggestion for the first intent based on the impact on at least one KPI when the solution of the first intent is executed, and send, to the IDMS producer, the information that indicates the execution suggestion. This can avoid a case in which when the solution of the first intent is executed, the at least one KPI does not satisfy a requirement of the IDMS consumer for the at least one KPI in a network to which a device executing the first intent belongs, and therefore ensure performance of the network to which the device executing the first intent belongs.

Furthermore, the IDMS producer may monitor, based on the first indication from the IDMS consumer, the impact of the at least one KPI indicated by the first indication when the first solution of the first intent is executed, and feed back the impact to the IDMS consumer. In this way, the IDMS consumer can determine the execution suggestion for the first intent based on the impact, to improve accuracy of determining the execution suggestion.

In addition, the IDMS producer can update data in the KM based on the detected offset of the at least one KPI when the solution of the first intent is executed, to improve accuracy of the data in the KM.

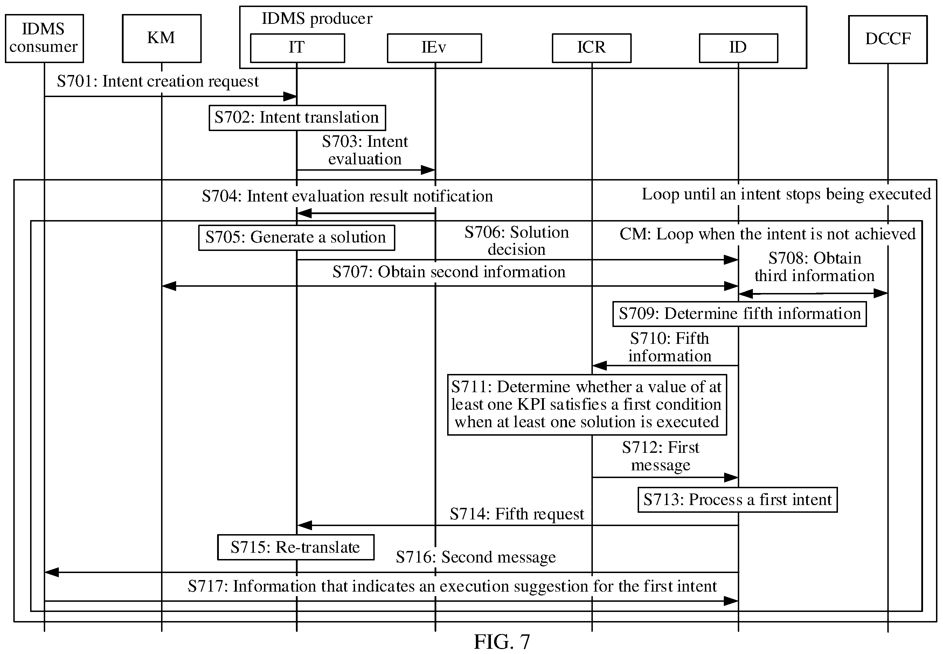

An embodiment of this application further provides an intent processing method. The method may be applied to the communication system shown in FIG. 1 or FIG. 2. The method shows still another possible implementation of the methods shown in FIG. 3 and FIG. 4. Refer to a flowchart shown in FIG. 7, an example in which a first device is an IDMS producer, a second device is an IDMS consumer, a third device is a KM, and a fourth device is a DCCF is used below to describe this embodiment of this application. In comparison with the embodiment shown in FIG. 5, in this embodiment, when an ID module in the IDMS producer fails to select a solution of a first intent, the IT module re-translates the first intent.

S701: The IDMS consumer sends an intent creation request to an IT module.

S702: The IT module performs intent translation on the first intent, and determines a first policy of the first intent.

S703: The IT module sends an intent evaluation message to an IEv module.

S704: The IEv module sends an intent evaluation result notification to the IT module.

Optionally, when the intent evaluation result notification includes information that indicates that the first intent is not satisfied, steps S705 to S717 may be performed. When the intent evaluation result notification includes information that indicates that the first intent is already satisfied, before stopping implementing the first intent, the IEv module may periodically or aperiodically determine whether the first intent is satisfied, and send the intent evaluation result notification to the IT module.

S705: The IT module generates a solution that can satisfy the first intent.

S706: The IT module sends a solution decision message to an ID module.

S707: The ID module obtains, from the KM, second information that indicates an offset of at least one KPI when at least one solution is executed.

S708: The ID module obtains, from the DCCF, third information that indicates a current value of the at least one KPI.

S709: The ID module determines, based on the second information and the third information, a value of the at least one KPI when the at least one solution is executed, to determine fifth information that indicates the value of the at least one KPI when the at least one solution is executed.

S710: The ID module sends the fifth information to an ICR module.

S711: The ICR module determines whether the value of the at least one KPI satisfies a condition (namely, a first condition) that the at least one KPI needs to satisfy when the at least one solution is executed.

S712: The ICR module sends a first message to the ID module.

S713: The ID module processes the first intent based on the first message.

For specific content of S701 to S713, refer to S501 to S513. Details are not described herein again.

S714: When the ID module does not select a solution used to satisfy the first intent, the ID module sends a fifth request to the IT module.

The fifth request is used to request the IT module to re-translate the first intent.

Optionally, the fifth request includes an identifier of the first intent.

S715: The IT module re-translates the first intent by using a second policy.

Optionally, before the policy for the first intent is not traversed, the IT module re-translates the first intent by using the second policy different from the first policy, to generate the solution of the first intent, and performs S706 to S713. When the policy for the first intent is already traversed, the IT module no longer re-translates the first intent. In this case, the IT module may send a message to the ID module, to trigger the ID module to perform S716.

S716: The ID module sends a second message to the IDMS consumer.

S717: The IDMS consumer sends, to the ID module, information that indicates an execution suggestion for the first intent.

For specific content of S716 and S717, refer to S514 and S515. Details are not described herein again.

Optionally, when the ID module fails to select, according to S705 to S717, the solution used to satisfy the first intent, S705 to S717 may be repeatedly performed until the ID module selects the solution used to satisfy the first intent.

The method may implement effect of the method shown in FIG. 5. Details are not described herein again.

In addition, in the method, when the ID module does not select the solution used to satisfy the first intent, the IT module may be triggered to re-translate the first intent, to generate the solution of the first intent, so that a probability that the ID module selects a proper solution can be increased.

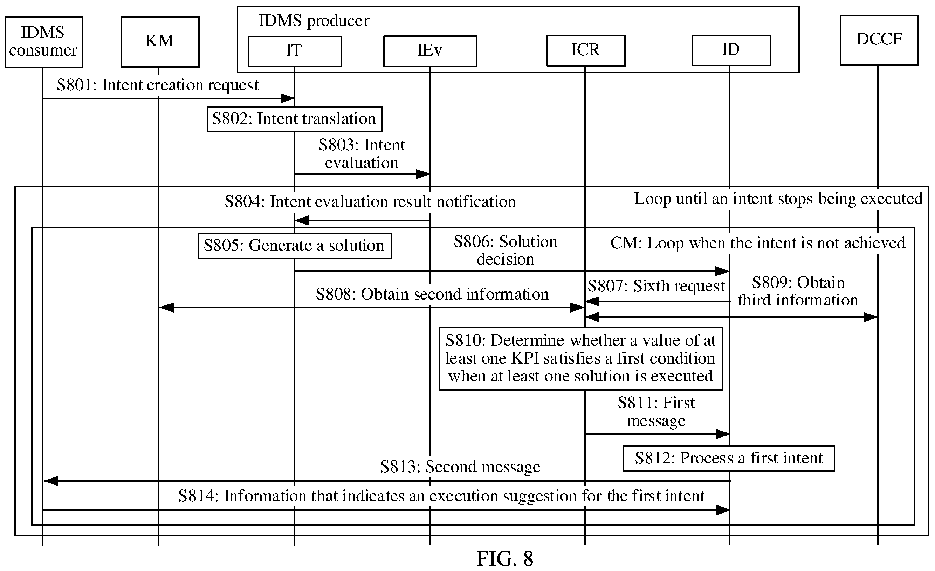

An embodiment of this application further provides an intent processing method. The method may be applied to the communication system shown in FIG. 1 or FIG. 2. The method shows yet another possible implementation of the methods shown in FIG. 3 and FIG. 4. Refer to a flowchart shown in FIG. 8, an example in which a first device is an IDMS producer, a second device is an IDMS consumer, a third device is a KM, and a fourth device is a DCCF is used below to describe this embodiment of this application. In comparison with the embodiment shown in FIG. 5, in this embodiment, an ICR module in the IDMS producer interacts with the KM and the DCCF.

S801: The IDMS consumer sends an intent creation request to an IT module.

S802: The IT module performs intent translation on the first intent, and determines a policy of the first intent.

S803: The IT module sends an intent evaluation message to an IEv module.

S804: The IEv module sends an intent evaluation result notification to the IT module.

Optionally, when the intent evaluation result notification includes information that indicates that the first intent is not satisfied, steps S805 to S814 may be performed. When the intent evaluation result notification includes information that indicates that the first intent is already satisfied, before stopping implementing the first intent, the IEv module may periodically or aperiodically determine whether the first intent is satisfied, and send the intent evaluation result notification to the IT module.

S805: The IT module generates a solution that can satisfy the first intent.

S806: The IT module sends a solution decision message to an ID module.

For specific content of S801 to S806, refer to S501 to S506. Details are not described herein again.

S807: The ID module sends a sixth request to an ICR.

The sixth request is used to trigger the ICR module to determine impact on at least one KPI when the solution of the first intent is executed.

For specific content of the impact on the at least one KPI when the solution of the first intent is executed, refer to the method shown in FIG. 3. Details are not described herein again.

Optionally, the sixth request includes information that indicates the solution of the first intent.

S808: The ICR module obtains, from the KM, second information that indicates an offset of the at least one KPI when the at least one solution is executed.

S809: The ICR module obtains, from the DCCF, third information that indicates a current value of the at least one KPI.

For specific content of S808 and S809, refer to S507 and S508. An only difference is that the ID module in S507 and S508 is replaced with the ICR module.

S810: The ICR module determines whether the value of the at least one KPI satisfies a condition (namely, a first condition) that the at least one KPI needs to satisfy when the at least one solution is executed.

For specific content of S810, refer to the method in FIG. 3. Details are not described herein again.

S811: The ICR module sends a first message to the ID module.

S812: The ID module processes the first intent based on the first message.

Optionally, when the ID module does not select a solution used to satisfy the first intent (corresponding to stopping executing the first intent in the method shown in FIG. 4), S813 and S814 may be performed.

S813: The ID module sends a second message to the IDMS consumer.

S814: The IDMS consumer sends, to the ID module, information that indicates an execution suggestion for the first intent.

For specific content of S811 to S814, refer to S512 to S515. Details are not described herein again.

Optionally, when the ID module fails to select, according to S805 to S814, the solution used to satisfy the first intent, S805 to S814 may be repeatedly performed until the ID module selects the solution used to satisfy the first intent.

The method may implement effect of the method shown in FIG. 5. Details are not described herein again.

Furthermore, in comparison with the method shown in FIG. 5, the ICR module directly interacts with the KM and the DCCF, to reduce a quantity of messages and save signaling overheads.

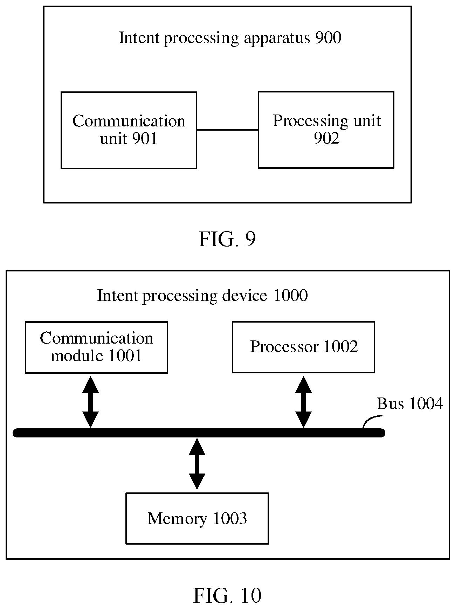

Based on a same technical concept, this application further provides an intent processing apparatus. A structure of the apparatus is shown in FIG. 9, and includes a communication unit 901 and a processing unit 902. An intent processing apparatus 900 may be used in an intent producer (for example, the IDMS producer in the communication system shown in FIG. 1 or the MnS producer in the communication system shown in FIG. 2) or an intent consumer (for example, the IDMS consumer in the communication system shown in FIG. 1 or the MnS consumer in the communication system shown in FIG. 2), and may implement the intent processing methods provided in the foregoing embodiments and instances of this application. Functions of units in the intent processing apparatus 900 are described below.

The communication unit 901 is configured to receive and send data.

The communication unit 901 may be implemented through a physical interface, a communication module, a communication interface, or an input/output interface. The intent processing apparatus 900 may be connected to a network cable or a cable by using the communication unit, to establish a physical connection to another device.

In an implementation, the intent processing apparatus 900 is used in the first device in the embodiment of this application shown in FIG. 3, or is used in the IDMS producer in the embodiment of this application shown in any one of FIG. 5 to FIG. 8. The following describes specific functions of the processing unit 902 in this implementation.

The processing unit 902 is configured to: send first information to a second device by using the communication unit 901, where the first information indicates impact on at least one key performance indicator KPI when a solution of a first intent is executed; and receive, by using the communication unit 901, information that indicates an execution suggestion for the first intent and that is from the second device.

Optionally, the processing unit 902 is further configured to: before sending the first information to the second device by using the communication unit 901, receive, by using the communication unit 901, information that indicates the at least one KPI and that is from the second device.

Optionally, the information that indicates the at least one KPI includes at least one of the following:
the at least one KPI; and
an identifier and/or an intent expression of a second intent, where the second intent indicates the at least one KPI.

Optionally, the at least one KPI includes at least one of the following:
a throughput, a throughput volume, energy consumption, bandwidth usage, a delay, and a packet loss rate.

Optionally, the first information includes:
information that indicates a value of the at least one KPI when the solution of the first intent is executed; and/or
information that indicates an offset of the at least one KPI when the solution of the first intent is executed, and information that indicates a current value of the at least one KPI.

Optionally, the processing unit 902 is further configured to: before sending the first information to the second device by using the communication unit 901, receive second information from a third device by using the communication unit 901, where the second information indicates at least one of the following: the offset of the at least one KPI when the solution of the first intent is executed, or an offset of the at least one KPI when at least one operation in the solution of the first intent is executed.

Optionally, the solution of the first intent is at least one solution that can satisfy the first intent.

Optionally, the execution suggestion includes: stopping executing the first intent, or executing a first solution of the first intent.

In an implementation, the intent processing apparatus 900 is used in the second device in the embodiment of this application shown in FIG. 3, or is used in the IDMS consumer in the embodiment of this application shown in any one of FIG. 5 to FIG. 8. The following describes specific functions of the processing unit 902 in this implementation.

The processing unit 902 is configured to receive first information from a first device by using the communication unit 901, where the first information indicates impact on at least one key performance indicator KPI when a solution of a first intent is executed; and send, to the first device, by using the communication unit 901, information that indicates an execution suggestion for the first intent.

Optionally, the processing unit 902 is specifically configured to: before receiving the first information from the first device by using the communication unit 901, send, to the first device, by using the communication unit 901, information that indicates the at least one KPI.

Optionally, the information that indicates the at least one KPI includes at least one of the following:
the at least one KPI; and
an identifier and/or an intent expression of a second intent, where the second intent indicates the at least one KPI.

Optionally, the at least one KPI includes at least one of the following:
a throughput, a throughput volume, energy consumption, and bandwidth usage.

Optionally, the first information includes:
information that indicates a value of the at least one KPI when the solution of the first intent is executed; and/or
information that indicates an offset of the at least one KPI when the solution of the first intent is executed, and information that indicates a current value of the at least one KPI.

Optionally, the solution of the first intent is at least one solution that can satisfy the first intent.

Optionally, the execution suggestion includes: stopping executing the first intent, or executing a first solution of the first intent.

It should be noted that, in the foregoing embodiments of this application, division into the modules is an example, is merely logical function division, and may be other division during actual implementation. In addition, function units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in the form of a software product. The computer software product is stored in a storage medium and includes several instructions for instructing a computer device (which may be a personal computer, a server, a network device, or the like) or a processor (processor) to perform all or a part of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

Based on a same technical concept, this application further provides an intent processing device. The intent processing device may be used in an intent producer (for example, the IDMS producer in the communication system shown in FIG. 1 or the MnS producer in the communication system shown in FIG. 2) or an intent consumer (for example, the IDMS consumer in the communication system shown in FIG. 1 or the MnS consumer in the communication system shown in FIG. 2), and may implement the intent processing methods provided in the foregoing embodiments and instances of this application, has a function of the intent processing apparatus shown in FIG. 9. Refer to FIG. 10, an intent processing device 1000 includes a communication module 1001, a processor 1002, and a memory 1003. The communication module 1001, the processor 1002, and the memory 1003 are connected to each other.

Optionally, the communication module 1001, the processor 1002, and the memory 1003 are connected to each other via a bus 1004. The bus 1004 may be a peripheral component interconnect (peripheral component interconnect, PCI) bus, an extended industry standard architecture (extended industry standard architecture, EISA) bus, and or the like. The bus may be classified into an address bus, a data bus, a control bus, and the like. For ease of representation, only one thick line is for representing the bus in FIG. 10, but this does not mean that there is only one bus or only one type of bus.

The communication module 1001 is configured to receive and send data, to implement communication interaction with another device. For example, the communication module 1001 may be implemented through a physical interface, a communication module, a communication interface, or an input/output interface.

In an implementation, an intent processing apparatus 900 is used in the first device in the embodiment of this application shown in FIG. 3, or is used in the IDMS producer in the embodiment of this application shown in any one of FIG. 5 to FIG. 8. The following describes specific functions of the processor 1002 in this implementation. The processor 1002 is specifically configured to:
send first information to a second device by using the communication module 1001, where the first information indicates impact on at least one key performance indicator KPI when a solution of a first intent is executed; and receive, by using the communication module 1001, information that indicates an execution suggestion for the first intent and that is from the second device.

In an implementation, the intent processing apparatus 900 is used in the second device in the embodiment of this application shown in FIG. 3, or is used in the IDMS consumer in the embodiment of this application shown in any one of FIG. 5 to FIG. 8. The processor 1002 is specifically configured to:
receive first information from a first device by using the communication module 1001, where the first information indicates impact on at least one key performance indicator KPI when a solution of a first intent is executed; and send, to the first device, by using the communication module 1001, information that indicates an execution suggestion for the first intent.

For a specific function of the processor 1002, refer to the descriptions in the intention processing methods provided in the foregoing embodiments and instances of this application, and the specific function descriptions of the intent processing apparatus 900 in the embodiment of this application shown in FIG. 9. Details are not described herein again.

The memory 1003 is configured to store program instructions, data, and the like. Specifically, the program instructions may include program code, and the program code includes computer operation instructions. The memory 1003 may include an RAM, and may further include a non-volatile memory (non-volatile memory), for example, at least one magnetic disk memory. The processor 1002 executes the program instructions stored in the memory 1003, and implements the foregoing functions by using the data stored in the memory 1003, to implement the intent processing methods provided in the foregoing embodiments of this application.

It may be understood that, in FIG. 10 of this application, the memory 1003 may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. By way of example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type.

Based on the foregoing embodiments, an embodiment of this application further provides a computer program. When the computer program is run on a computer, the computer is enabled to perform the methods provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the methods provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of instructions or a data structure and can be accessed by the computer.

Based on the foregoing embodiments, embodiments of this application further provide a chip. The chip is configured to read a computer program stored in a memory, to implement the methods provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide an intent processing method, apparatus, and device. In the method, after sending, to a second device, first information that indicates impact on at least one KPI when a solution of a first intent is executed, a first device receives information that indicates an execution suggestion for the first intent and that is from the second device. In this way, the second device may determine the execution suggestion for the first intent based on the impact on the at least one KPI when the solution of the first intent is executed. This can avoid a case in which when the solution of the first intent is executed, the at least one KPI does not satisfy a requirement of the second device for the at least one KPI in a network to which a device executing the first intent belongs, and therefore ensure performance of the network to which the device executing the first intent belongs.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An intent processing method, applied to a first device, wherein the method comprises:
sending first information to a second device, wherein the first information indicates impact on at least one key performance indicator KPI when a solution of a first intent is executed; and
receiving information that indicates an execution suggestion for the first intent and that is from the second device.

2. The method according to claim 1, wherein before the sending first information to a second device, the method further comprises:
receiving information that indicates the at least one KPI and that is from the second device.

3. The method according to claim 2, wherein the information that indicates the at least one KPI comprises at least one of the following:
the at least one KPI; and
an identifier and/or an intent expression of a second intent, wherein the second intent indicates the at least one KPI.

4. The method according to any one of claims 1 to 3, wherein the at least one KPI comprises at least one of the following:
a throughput, a throughput volume, power consumption, bandwidth usage, a delay, and a packet loss rate.

5. The method according to any one of claims 1 to 4, wherein the first information comprises:
information that indicates a value of the at least one KPI when the solution of the first intent is executed; and/or
information that indicates an offset of the at least one KPI when the solution of the first intent is executed, and information that indicates a current value of the at least one KPI.

6. The method according to any one of claims 1 to 5, wherein before the sending first information to a second device, the method further comprises:
receiving second information from a third device, wherein the second information indicates at least one of the following: the offset of the at least one KPI when the solution of the first intent is executed, and an offset of the at least one KPI when at least one operation in the solution of the first intent is executed.

7. The method according to any one of claims 1 to 6, wherein the solution of the first intent is at least one solution that can satisfy the first intent.

8. The method according to any one of claims 1 to 7, wherein the execution suggestion comprises: stopping executing the first intent, or executing a first solution of the first intent.

9. An intent processing method, applied to a second device, wherein the method comprises:
receiving first information from a first device, wherein the first information indicates impact on at least one key performance indicator KPI when a solution of a first intent is executed; and
sending, to the first device, information that indicates an execution suggestion for the first intent.

10. The method according to claim 9, wherein before the receiving first information from a first device, the method further comprises:
sending, to the first device, information that indicates the at least one KPI.

11. The method according to claim 10, wherein the information that indicates the at least one KPI comprises at least one of the following:
the at least one KPI; and
an identifier and/or an intent expression of a second intent, wherein the second intent indicates the at least one KPI.

12. The method according to any one of claims 9 to 11, wherein the at least one KPI comprises at least one of the following:
a throughput, a throughput volume, power consumption, and bandwidth usage.

13. The method according to any one of claims 9 to 12, wherein the first information comprises:
information that indicates a value of the at least one KPI when the solution of the first intent is executed; and/or
information that indicates an offset of the at least one KPI when the solution of the first intent is executed, and information that indicates a current value of the at least one KPI.

14. The method according to any one of claims 9 to 13, wherein the solution of the first intent is at least one solution that can satisfy the first intent.

15. The method according to any one of claims 9 to 14, wherein the execution suggestion comprises: stopping executing the first intent, or executing a first solution of the first intent.

16. An intent processing method, wherein the method comprises:
sending, by a first device, first information to a second device, wherein the first information indicates impact on at least one key performance indicator KPI when a solution of a first intent is executed; and
sending, by the second device to the first device, information that indicates an execution suggestion for the first intent.

17. The method according to claim 16, wherein before the sending, by a first device, first information to a second device, the method further comprises:
sending, by the second device to the first device, information that indicates the at least one KPI.

18. An intent processing apparatus, comprising:
a communication unit, configured to receive and send data; and
a processing unit, configured to perform the method according to any one of claims 1 to 15 by using the communication unit.

19. An intent processing system, comprising:
a first device, configured to implement the method according to any one of claims 1 to 8; and
a second device, configured to implement the method according to any one of claims 9 to 15.

20. A computer-readable storage medium, wherein the computer-readable storage medium stores a computer program, and when the computer program is run on a computer, the computer is enabled to perform the method according to any one of claims 1 to 15.

21. A chip, wherein the chip is coupled to a memory, and the chip reads a computer program stored in the memory to perform the method according to any one of claims 1 to 15.
